# EUROPÄISCHE PATENTANMELDUNG

(11) **EP 1 952 706 A1**
(43) Veröffentlichungstag der Anmeldung: **06.08.2008**
(21) Anmeldenummer: 08075081.3
(22) Anmeldetag: 31.01.2008
(51) Int. Cl.: A24C 5/356, B65G 11/20, B65G 47/19

(54) **Entleermagazin und Verfahren zum Entleeren von mit stabförmigen Produkten gefüllten Schragen, insbesondere Schachtschragen**

(30) Priorität: 31.01.2007 DE 102007005749
(71) Anmelder: Hauni Maschinenbau AG, 21033 Hamburg (DE)
(72) Erfinder: Budny, Piotr, 21035 Hamburg (DE); Müller, Thomas, 20251 Hamburg (DE); Horn, Matthias, 22926 Ahrensburg (DE); Knabe, Michael, 21502 Geesthacht (DE); Meier, Arnd, 21643 Becksdorf (DE)
(74) Vertreter: Wenzel & Kalkoff

(57) **Zusammenfassung**

Die Erfindung betrifft ein Entleermagazin (10) für eine Schragenentleerstation zum Entleeren von mit stabförmigen Produkten gefüllten Schragen, insbesondere Schachtschragen (11), umfassend einen Aufnahmeraum (18) für die aus den Schragen strömenden Produkte, wobei der Aufnahmeraum (18) nach oben in Richtung der Schragen geöffnet und nach unten durch ein einen Kanal (23) bildendes Förderelement (22) zum Abtransport der Produkte begrenzt ist, sowie Stromregulierungselemente (26) innerhalb des Aufnahmeraumes (18) zur Steuerung des Produktstroms innerhalb des Entleermagazins (10), dass sich dadurch auszeichnet, dass dem Entleermagazin (10) ein Überwachungsmittel (28) zugeordnet ist, das zur Erfassung der Füllstandshöhe innerhalb des Schragens eingerichtet und ausgebildet ist, wobei das oder jedes Überwachungsmittel (28) zur individuellen Steuerung der Stromregulierungselemente (26) mit diesen in Wirkverbindung steht. Des Weiteren betrifft die Erfindung ein entsprechendes Verfahren.

## Beschreibung

Die Erfindung betrifft ein Entleermagazin für eine Schragenentleerstation zum Entleeren von mit stabförmigen Produkten gefüllten Schragen, insbesondere Schachtschragen, umfassend einen Aufnahmeraum für die aus den Schragen strömenden Produkte, wobei der Aufnahmeraum nach oben in Richtung der Schragen geöffnet und nach unten durch ein einen Kanal bildendes Förderelement zum Abtransport der Produkte begrenzt ist, sowie Stromregulierungselemente innerhalb des Aufnahmeraumes zur Steuerung des Produktstroms innerhalb des Entleerungsmagazins. Des Weiteren betrifft die Erfindung ein Verfahren zum Entleeren von mit stabförmigen Produkten gefüllten Schragen, insbesondere Schachtschragen, umfassend die Schritte: Öffnen des Schragens bzw. Schachtschragens, Leiten des Produktstroms durch einen Aufnahmeraum des Entleermagazins in den Bereich eines Förderelementes, wobei der Produktstrom durch Stromregulierungselemente innerhalb des Aufnahmeraums sowie im Bereich eines durch das Förderelement gebildeten Kanals reguliert wird, und Abtransport des Produktstroms entlang des Kanals.

Solche Vorrichtungen und Verfahren kommen insbesondere in der Tabak verarbeitenden Industrie bei der Verarbeitung von stabförmigen Produkten zum Einsatz. Zigaretten, Filterstäbe oder dergleichen werden aus unterschiedlichen Gründen in Behältern, den so genannten Schragen, zur Speicherung aufbewahrt. Dabei können die Behälter als Standardschragen mit einem einzigen Aufnahmeraum für die Produkte oder als Schachtschragen ausgebildet sein, in denen die Produkte in mehreren voneinander getrennten Schächten liegen. Zur Weiterverarbeitung der gespeicherten Produkte werden diese an nachgeordnete Vorrichtungen, wie z.B. Packmaschinen oder dergleichen abgegeben oder in einen vorhandenen Massenstrom eingeschleust. Für die automatisierte Zufuhr der Artikel aus den Behältern stehen üblicherweise Entleerstationen zur Verfügung. Die Entleerstationen weisen in bekannter Weise eine Zuführung für mit Produkten gefüllte Schragen, ein Entleermagazin, eine Abführung für die geleerten Schragen sowie eine Übergabeeinrichtung auf, mittels der die vollen Schragen von der Zuführung in den Bereich des Entleermagazins und vom Entleermagazin in den Bereich der Abführung transportiert werden. Die Übergabeeinrichtung kann unterschiedlich ausgebildet sein. Verbreitet sind Schwenkeinrichtungen, die eine Aufnahme für einen oder mehrere Schragen aufweisen und denen ein bewegbares Schließelement für die nach oben offenen Schragen zugeordnet ist.

Das eigentliche Entleermagazin dient dazu, die bei geöffnetem Schließelement aus den Schragen strömenden Produkte kontinuierlich und gleichmäßig über das den Aufnahmeraum des Entleermagazins nach unten begrenzende Förderelement abzuführen und den nachgeordneten Vorrichtungen oder dergleichen zuzuführen. Ein aus der DE 41 18 267 A1 bekanntes Entleermagazin weist einen Aufnahmeraum zum Aufnehmen der aus den Schragen fallenden Produkte auf. Dieser Aufnahmeraum ist nach oben in Richtung der zu entleerenden Schragen offen ausgebildet und nach unten durch ein Förderelement begrenzt. Dieses Förderelement ist derart unterhalb des Aufnahmeraums angeordnet, dass zwischen dem Aufnahmeraum und dem Förderelement ein Kanal gebildet ist, der zum Abtransport der Produkte dient. Innerhalb des Aufnahmeraums sind mehrere Stromregulierungselemente angeordnet. Die Stromregulierungselemente umfassen einerseits Stäbe, die rotierend oder linear hin und her bewegbar sind, und andererseits auf und ab bewegbare Schachtwände. Mit anderen Worten sind die Auslassschächte bildende Schachtwände insgesamt in ihrer Lage vertikal verstellbar. Zur Überwachung des Produktstroms innerhalb des Entleermagazins sind im Aufnahmebereich Sensoren zur Überwachung des Niveaus innerhalb des Aufnahmeraums angeordnet, wobei die durch die Sensoren erfassten Informationen zur Steuerung des aus zwei Austragsbändern gebildeten Förderelementes dienen. Diese Vorrichtung weist jedoch den Nachteil auf, dass der Entleervorgang trotz der Überwachung des Produktstroms innerhalb des Entleermagazins ungleichmäßig erfolgt. In der Folge kann es beim Entleeren der Schragen und insbesondere von Schachtschragen zu Blockaden in den einzelnen vertikal verlaufenden Auslassschächten und/oder im horizontalen Kanal kommen.

Der Erfindung liegt die Aufgabe zugrunde, eine Vorrichtung und ein Verfahren zum sicheren und gleichmäßigen Entleeren von mit Produkten gefüllten Schragen, insbesondere Schachtschragen, vorzuschlagen.

Diese Aufgabe wird durch eine Vorrichtung der eingangs genannten Art dadurch gelöst, dass dem Entleermagazin ein Überwachungsmittel zur Erfassung der Füllstandshöhe innerhalb des Schragens zugeordnet ist, wobei das oder jedes Überwachungsmittel zur individuellen Steuerung der Stromregulierungselemente mit diesen in Wirkverbindung steht. Durch die erfindungsgemäße Ausbildung ist eine wirksame Einstellung der Stromregulierungselemente gewährleistet. Durch die Kombination von gesteuerten Stromregulierungselementen einerseits und Überwachungsmittel für die Füllstandshöhe innerhalb des Schragens und des Magazins andererseits ist eine störungsfreie Entleerung sichergestellt. Die Niveauregulierung bereits innerhalb des Schragens und damit auch innerhalb des Entleermagazins sowie im Bereich des Kanals ermöglicht auf überraschend einfache Weise das gleichmäßige Entleeren von Schragen und Schachtschragen.

Eine zweckmäßige Weiterbildung der Erfindung sieht vor, dass die Stromregulierungselemente zur abschnittsweisen Veränderung der Höhe des Kanals in ihrer Kontur veränderbar sind. Anders als im Stand der Technik, bei dem die Stromregulierungselemente als ganzes bewegbar sind, sind die erfindungsgemäßen Stromregulierungselemente in sich veränderbar, nämlich formvariabel, indem z.B. durch Auseinanderziehen oder Zusammenschieben eine Volumenänderung bewirkt wird. Damit lässt sich der Produktstrom individuell auf den jeweiligen Füllzustand einstellen.

Vorzugsweise umfassen die Stromregulierungselemente schwenkbare Leitklappen. Durch die Leitklappen einerseits und deren Schwenkbarkeit anderseits ist ein noch besserer und genauerer Ausgleich des Produktstroms innerhalb des Entleermagazins gewährleistet, was den Entleervorgang optimiert.

Eine bevorzugte Ausführungsform ist dadurch gekennzeichnet, dass das Überwachungsmittel mindestens zwei Sensorelemente umfasst, die Anzahl der Sensorelemente jedoch bevorzugt der Anzahl der Schächte eines zu entleerenden Schachtschragens entspricht und die Sensorelemente derart angeordnet sind, dass die Füllstandshöhe jedes Schachtes separat ermittelbar ist. Dadurch ist eine noch präzisere Einstellung der Stromregulierungselemente sichergestellt, was die oben erwähnten Vorteile noch weiter verstärkt.

Eine weitere zweckmäßige Ausgestaltung zeichnet sich dadurch aus, dass das Befüllmagazin für jeden Schacht eines zu entleerenden Schachtschragens mindestens zwei Sensorelemente aufweist, wobei die Sensorelemente über- bzw. untereinander angeordnet sind. Diese Ausführungsform gewährleistet ebenfalls eine sichere und gleichmäßige Entleerung durch optimierten Abfluss des Produktstroms mittels abschnittsweiser Niveauregulierung.

Die Aufgabe wird auch durch ein Verfahren mit den eingangs genannten Schritten dadurch gelöst, dass die Füllstandshöhe innerhalb des Schragens bzw. Schachtschragens ermittelt wird und die Stromregulierungselemente entsprechend der Füllstandshöhe eingestellt werden. Die sich daraus ergebenden Vorteile wurden bereits im Zusammenhang mit der Vorrichtung beschrieben, so dass zur Vermeidung von Wiederholungen auf die entsprechenden Textpassagen verwiesen wird.

Weitere zweckmäßige oder vorteilhafte Merkmale und Weiterbildungen sowie Verfahrensschritte ergeben sich aus den Unteransprüchen und der Beschreibung. Besonders bevorzugte Ausführungsformen werden anhand der beigefügten Zeichnung näher erläutert. In der Zeichnung zeigt:
- Fig. 1: eine Vorderansicht auf eine erste Ausführungsform eines Entleermagazins ohne Vorderwand, und
- Fig. 2: eine Vorderansicht auf eine zweite Ausführungsform eines Entleermagazins ohne Vorderwand.

Die beschriebenen Entleermagazine dienen zum Entleeren von mit stabförmigen Produkten gefüllten Schragen bzw. Schachtschragen.

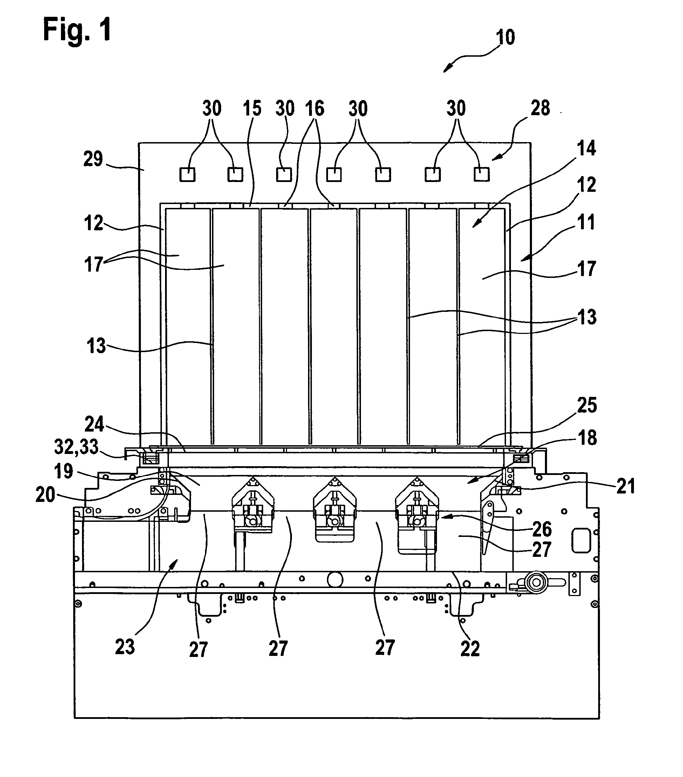

In der Figur 1 ist eine erste Ausführungsform eines solchen Entleermagazins 10 dargestellt, das zum Entleeren von Schachtschragen 11 ausgebildet ist. Der Schachtschragen 11 weist Seitenwände 12, parallel zu den Seitenwänden 12 verlaufende Schachtwände 13, eine Rückenwand 14 sowie eine Bodenwand 15 auf. Die Bodenwand kann Öffnungen 16 aufweisen (siehe Figur 1) oder mindestens teilweise transparent ausgebildet sein, um es Überwachungsmitteln, die weiter unten beschrieben werden, zu erlauben, die Füllstandshöhe innerhalb der Schächte 17 zu erfassen. Entsprechendes gilt für die Rückwand 14. Das Entleermagazin 10 weist einen Aufnahmeraum 18 auf, der aus einer Rückwand 19, einer Vorderwand, die aus Gründen der besseren Übersicht nicht dargestellt ist, sowie Seitenwänden 20, 21 gebildet ist. Nach unten ist der Aufnahmeraum 18 durch ein in beide Richtungen antreibbares Förderelement 22 begrenzt, das zur Bildung eines Kanals 23 beabstandet zum Aufnahmeraum 18 angeordnet ist. Nach oben hin in Richtung des Schachtschragens 11 ist der Aufnahmeraum 18 offen ausgebildet.

Ein zu entleerender Schachtschragen 11 ist oberhalb des Aufnahmeraums 18 über ein Anschlussmittel 24 an das Entleermagazin 10 angeschlossen bzw. mit diesem verbunden. Der Schachtschragen 11 steht für den Entleervorgang über Kopf. Das bedeutet, dass die Produkte innerhalb der Schächte 17 auf einem der Bodenwand 15 gegenüber liegenden Schließelement 25 liegen. Das Schließelement 25 kann in bekannter Weise z.B. ein bewegbares Schwert sein, das in horizontaler Richtung bewegbar ist. Das Schließelement 25 kann des Weiteren Bestandteil des Entleermagazins 10 aber auch einer nicht dargestellten Übergabereinrichtung für die vollen und entleerten Schachtschragen 11 sein. Bei der Übergabeeinrichtung handelt es sich um übliche Schwenkeinrichtungen oder dergleichen, weswegen auf eine Darstellung und Beschreibung verzichtet wird.

Innerhalb des Aufnahmeraums 18 sind Stromregulierungselemente 26 angeordnet, die zum Steuern des Produktstroms innerhalb des Entleermagazins 10 dienen. Die Stromregulierungselemente 26 sind innerhalb des Aufnahmeraums 18 ortsfest angeordnet, also gerade nicht als Ganzes bewegbar. Allerdings sind die Stromregulierungselemente 26 zur abschnittsweisen Veränderung der Höhe des Kanals 23 in ihrer Kontur veränderbar. Wie aus den Figuren ersichtlich, ist das in den Figuren links angeordnete Stromregulierungselement 26 zusammen geschoben, während das rechte Stromregulierungselement 26 auseinander gezogen ist. Mit anderen Worten sind die Stromregulierungselemente 26 teleskopartig in der Länge verstellbar, wobei der untere bewegbare Abschnitt des Stromregulierungselementes 26 eine etwas geringere Breits aufweist als der feststehende Abschnitt, und in diesen eintaucht. Andere Ausführungsformen, wie beispielsweise eine kammartige Verbindung sind ebenfalls möglich. Zur Automation der Verstellung ist den Stromregulierungselementen 26 vorzugsweise jeweils ein (nicht dargestellter) Antrieb zugeordnet. Die Verstellbarkeit kann jedoch auch jede andere übliche Weise realisiert sein. Die Verstellbarkeit der Länge in vertikaler Richtung bewirkt beim Einfahren oder Ausfahren eine Veränderung des Abstands zwischen den einzelnen Stromregulierungselementen 26 und dem Förderelement 22. Durch den veränderten Abstand ändert sich zwangsläufig auch der Querschnitt des Kanals 23, so dass direkten Einfluss auf den Produktstrom genommen werden kann. Mehrere solcher Stromregulierungselemente 26, die als Verdrängungskörper ausgebildet sind, sind innerhalb des Aufnahmeraums 18 bevorzugt in einem unteren Bereich beabstandet zueinander angeordnet und bilden vertikal verlaufende Auslassschächte 27. Die Anzahl und Anordnung der Stromregulierungselemente kann selbstverständlich variieren. In den beschriebenen Ausführungsformen sind drei Verdrängungskörper vorgesehen, die zusammen mit den Seitenwänden 20, 21 vier Auslassschächte 27 bilden. Die Auslassschächte 27 sind durch die Ausbildung und Anordnung der Seitenwände 20, 21 einerseits und der Stromregulierungselemente 26 andererseits in Richtung des Schachtschragens 11 trichterförmig geöffnet, was den Produktstrom erleichtert.

Dem Entleermagazin 10 ist des Weiteren ein Überwachungsmittel 28 zugeordnet. Das Überwachungsmittel 28, das z.B. an einem Rahmen 29 oder dergleichen des Entleermagazins 10 angeordnet sein kann, dient zur Erfassung der Füllstandshöhe der Produkte innerhalb des Schragens bzw. innerhalb der Schächte 17 des Schachtschragens 11. Vorzugsweise mehrere als Überwachungsmittel 28 dienende Sensorelemente 30 stehen zur individuellen Steuerung der Stromregulierungselemente 26 mit diesen in Wirkverbindung. Diese Wirkverbindung kann z.B. über eine gemeinsame (nicht dargestellte) Steuerung oder dergleichen hergestellt werden. Das Überwachungsmittel 28 umfasst mindestens zwei Sensorelemente 30. Bevorzugt entspricht die Anzahl der Sensorelemente 30 jedoch der Anzahl der Auslassschächte 27. Für den Fall, dass das Entleermagazin 10 zum Entleeren von Schachtschragen 11 eingerichtet ist, entspricht die Anzahl der Sensorelemente 30 der Anzahl der Schächte 17 des Schachtschragens 11. Dabei sind die Sensorelemente 30 derart angeordnet, dass die Füllstandshöhe jedes Schachts 17 separat ermittelbar ist. Die Anordnung kann unterschiedlich gewählt sein.

In der Ausführungsform gemäß Figur 1 sind die Sensorelemente 30 oberhalb des Schachtschragens 11 positioniert. Genauer ist oberhalb jedes Schachtes 17 ein einzelnes Sensorelement 30 angeordnet. Wie weiter oben erwähnt, ist die Bodenwand 15 des Schachtschragens 11 derart präpariert oder ausgebildet, dass die aktuelle Füllstandshöhe innerhalb des Schachtes 17 ermittelt werden kann. In einer nicht explizit dargestellten Ausführungsform sind die Sensorelemente 30 hinter bzw. vor den Schächten 17 angeordnet, und zwar derart, dass die Sensorelemente 30 in einem Winkel von schräg oben auf die Produkte innerhalb der Schächte 17 gerichtet sind. In diesem Fall kann die Füllstandshöhe durch die offene Vorderwand oder eine - wie weiter oben beschriebenpräparierte oder entsprechend ausgebildete Rückwand 14 ermittelt werden.

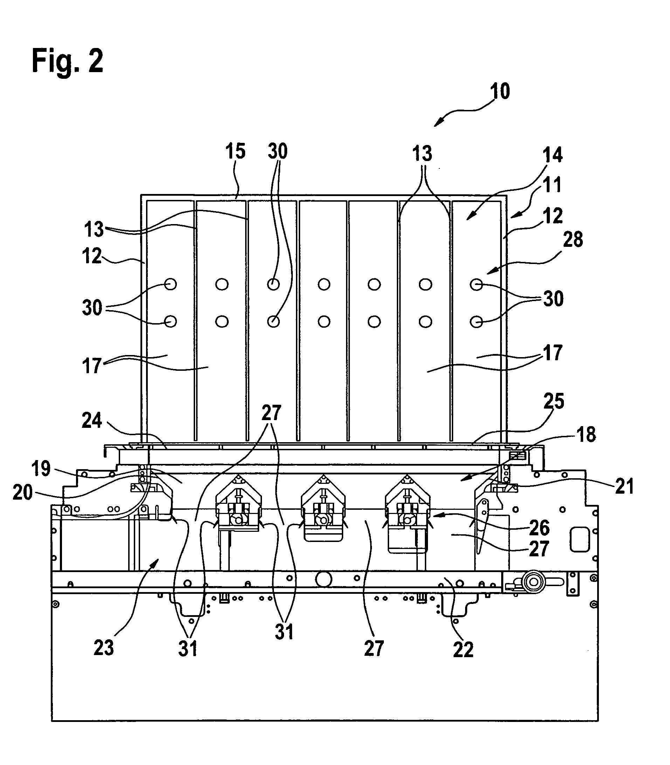

Die Ausführungsform gemäß Figur 2 unterscheidet sich von der in Figur 1 gezeigten im Wesentlichen darin, dass die Sensorelemente 30 horizontal gerichtet sind. Jedem Schacht 17 eines Schachtschragens 11 sind mindestens zwei Sensorelemente 30 zugeordnet, die übereinander oder untereinander angeordnet sind. Ein weiterer Unterschied bei der Ausführungsform gemäß Figur 2 besteht darin, dass die Stromregulierungselemente 26 Leitelemente 31 umfassen. Diese als schwenkbare Leitklappen ausgebildeten Leitelemente 31 sind zur Veränderung des Querschnitts der Auslassschächte 27 eingerichtet und angeordnet. Dabei sind jedem Auslassschacht 27 an einander gegenüberliegenden Seiten zwei Leitklappen zugeordnet, die, angesteuert über die Sensorelemente 30, um eine Achse aus einer Ruheposition (maximaler Querschnitt der Auslassschächte) in eine Sperrposition (minimaler Querschnitt der Auslassschächte) und umgekehrt schwenkbar sind. Die Form und Größe der Leitklappen ist variabel. Bevorzugt sind die Leitklappen aber derart ausgebildet, dass sie die Auslassschächte 27 selbst in der Sperrposition nicht vollständig verschließen. Die Leitelemente 31 können auch an fest stehenden Wänden von Auslassschächten 27 angeordnet sein.

Zusätzlich zu dem bereits beschriebenen Überwachungsmittel 28 kann dem Entleermagazin 10 mindestens ein weiteres Überwachungsmittel 32 zugeordnet sein, das unterhalb des zu entleerenden Schachtschragens 11 und oberhalb des Aufnahmeraums 18 des Befüllmagazins 10 angeordnet ist. Das horizontal gerichtete Überwachungsmittel 32, das z.B. auch ein Sensorelement 33 sein kann, dient zur Erfassung der Füllstandshöhe des Aufnahmeraums 18. Insbesondere wird dadurch verhindert, dass die Schachtschragen 11 beim Wechsel mit den innerhalb des Aufnahmeraums 18 befindlichen Produkten in Kontakt kommen. Sämtliche Sensorelemente 30, 33 sind bevorzugt als analoge optische Lichttaster ausgebildet. Andere Ausführungsformen der Sensorelemente 30, 33, z.B. als Ultraschallsensor etc., sind ebenfalls einsetzbar.

Das Entleermagazin 10 kann als separate Einheit oder als (integraler) Bestandteil einer Produktionslinie oder -anordnung eingesetzt werden. Selbstverständlich ist das Entleermagazin 10 auch zum Entleeren von Standard-Schragen mit einem einzigen Aufnahmeraum geeignet. Letztlich ist der Aufnahmeraum eines Standard-Schragen auch ein (breiter) Schacht 17, dem das Überwachungsmittel 28 zugeordnet sein kann.

Im Folgenden wird das Verfahrensprinzip anhand der Figuren näher erläutert: Ein mit Produkten gefüllter Schragen bzw. Schachtschragen 11 wird in üblicher Weise über Kopf in den Bereich des Anschlussmittels 24 des Entleermagazins 10 gebracht bzw. geschwenkt, wobei die Produkte durch das Schließelement 25 in dem Schachtschragen 11 gehalten werden. Sobald das Schließelement 25 geöffnet wird, fallen die Produkte in den Aufnahmeraum 18 des Entleermagazins 10. Der Produktstrom wird durch den Aufnahmeraum 18 und durch die Auslassschächte 27 dem Förderelement 22 zugeführt, das den Produktstrom durch den Kanal 23 aus dem Entleermagazin 10 transportiert. Während des Entleervorgangs wird die Füllstandshöhe in dem Schragen bzw. in jedem Schacht 17 des Schachtschragens überwacht und die ermittelten Informationen zur Steuerung der Stromregulierungselemente 26 verwendet.

Mit anderen Worten werden die Stromregulierungselemente 26 in Abhängigkeit der jeweiligen Füllstandshöhen innerhalb der Schächte 17 in ihrer Kontur verändert, also vergrößert oder verkleinert. Damit wird der Kanal 23 abschnittsweise im Querschnitt verändert, so dass das Niveau des Produktstroms in horizontaler Richtung geregelt wird. Alternativ oder zusätzlich kann auch noch der Querschnitt der Auslassschächte 27 verändert werden, indem die Leitelemente 31 bewegt werden. Die Bewegung der Leitelemente 31 wird ebenfalls über die Informationen der Sensorelemente 30 gesteuert und regelt den Produktstrom in vertikale Richtung. Durch die beschriebene Verfahrensweise wird eine gleichmäßige und sichere Entleerung von Schragen/Schachtschragen 11 erreicht, da insbesondere die einzelnen Schächte 17 des Schachtschragens 11 gleichmäßig Produkte abgeben. Ein Produktstau und/oder ein ungleichmäßiger Füllstand innerhalb des Aufnahmeraums 18 des Entleermagazins 10 wird damit vermieden. Zusätzlich kann der Füllstand des Aufnahmeraums 18 durch das Sensorelement 33 überwacht werden, um zu verhindern, dass Produkte nach oben aus dem Aufnahmeraum 18 ragen und damit im Wechselbereich der Schachtschragen 11 liegen.

## Patentansprüche

1. Entleermagazin (10) für eine Schragenentleerstation zum Entleeren von mit stabförmigen Produkten gefüllten Schragen, insbesondere Schachtschragen (11), umfassend einen Aufnahmeraum (18) für die aus den Schragen strömenden Produkte, wobei der Aufnahmeraum (18) nach oben in Richtung der Schragen geöffnet und nach unten durch ein einen Kanal (23) bildendes Förderelement (22) zum Abtransport der Produkte begrenzt ist, sowie Stromregulierungselemente (26) innerhalb des Aufnahmeraumes (18) zur Steuerung des Produktstroms innerhalb des Entleermagazins (10), **dadurch gekennzeichnet , dass** dem Entleermagazin (10) ein Überwachungsmittel (28) zugeordnet ist, das zur Erfassung der Füllstandshöhe innerhalb des Schragens eingerichtet und ausgebildet ist, wobei das oder jedes Überwachungsmittel (28) zur individuellen Steuerung der Stromregulierungselemente (26) mit diesen in Wirkverbindung steht.

2. Vorrichtung nach Anspruch 1, **dadurch gekennzeichnet, dass** das Überwachungsmittel (28) und die Stromregulierungselemente (26) über eine Steuerung miteinander verbunden sind.

3. Vorrichtung nach Anspruch 1 oder 2, **dadurch gekennzeichnet, dass** die Stromregulierungselemente (26) ortsfest innerhalb des Aufnahmeraumes (18) befestigt sind.

4. Vorrichtung nach einem der Ansprüche 1 bis 3, **dadurch gekennzeichnet, dass** die Stromregulierungselemente (26) zur abschnittsweisen Veränderung des Querschnitts des Kanals (23) in ihrer Kontur veränderbar sind.

5. Vorrichtung nach einem der Ansprüche 1 bis 4, **dadurch gekennzeichnet, dass** die Stromregulierungselemente (26) teleskopartig in der Länge in vertikaler Richtung zur Veränderung des Abstands zwischen Stromregulierungselement (26) und Förderelement (22) ausfahrbar und einfahrbar sind.

6. Vorrichtung nach einem der Ansprüche 1 bis 5, **dadurch gekennzeichnet, dass** mehrere als Verdrängungskörper ausgebildete Stromregulierungselemente (26) innerhalb des Aufnahmeraums (18) zur Bildung von vertikal gerichteten Auslassschächten (27) angeordnet sind.

7. Vorrichtung nach Anspruch 6, **dadurch gekennzeichnet, dass** über die gesamte Breite des Aufnahmeraumes (18) zwischen zwei äußeren Seitenwänden (20, 21) drei Verdrängungskörper derart angeordnet sind, dass vier Auslassschächte (27) gebildet sind.

8. Vorrichtung nach einem der Ansprüche 1 bis 7, **dadurch gekennzeichnet, dass** die Stromregulierungselemente (26) schwenkbare Leitklappen umfassen.

9. Vorrichtung nach Anspruch 8, **dadurch gekennzeichnet, dass** die Leitklappen zur Veränderung des Querschnitts der Auslassschächte (27) eingerichtet und angeordnet sind.

10. Vorrichtung nach Anspruch 8 oder 9, **dadurch gekennzeichnet, dass** jedem Auslassschacht (27) mindestens zwei Leitklappen zugeordnet sind.

11. Vorrichtung nach einem der Ansprüche 1 bis 10, **dadurch gekennzeichnet, dass** das Überwachungsmittel (28) mindestens zwei Sensorelemente (30) umfasst.

12. Vorrichtung nach einem der Ansprüche 1 bis 11, **dadurch gekennzeichnet, dass** die Anzahl der Sensorelemente (30) der Anzahl der Auslassschächte (27) entspricht.

13. Vorrichtung nach einem der Ansprüche 1 bis 12, **dadurch gekennzeichnet, dass** die Anzahl der Sensorelemente (30) der Anzahl der Schächte (17) eines zu entleerenden Schachtschragens (11) entspricht, wobei die Sensorelemente (30) derart angeordnet sind, dass die Füllstandshöhe jedes Schachtes (17) separat ermittelbar ist.

14. Vorrichtung nach Anspruch 13, **dadurch gekennzeichnet, dass** die Sensorelemente (30) oberhalb der Schächte (17) angeordnet und derart ausgebildet und eingerichtet sind, dass sie die Füllstandshöhe durch entsprechend vorbereitete Bodenwände (15) der Schragen hindurch ermitteln können.

15. Vorrichtung nach einem der Ansprüche 1 bis 12, **dadurch gekennzeichnet, dass** die Sensorelemente (30) vor bzw. hinter dem Schragen bzw. den Schächten (17) eines Schachtschragens (11) angeordnet sind, derart, dass sie jeweils in einem Winkel von schräg oben auf die Produkte innerhalb des Schachtes (17) gerichtet sind.

16. Vorrichtung nach einem der Ansprüche 1 bis 11, **dadurch gekennzeichnet, dass** das Befüllmagazin (10) für jeden Schacht (17) eines zu entleerenden Schachtschragens (11) mindestens zwei Sensorelemente (30) aufweist, wobei die Sensorelemente (30) über- bzw. untereinander angeordnet sind.

17. Vorrichtung nach einem der Ansprüche 1 bis 16, **dadurch gekennzeichnet, dass** unterhalb des zu entleerenden Schragens und oberhalb des Aufnahmeraums (18) des Befüllmagazins (10) ein zusätzliches Sensorelement (33) zur Erfassung der Füllstandshöhe des Aufnahmeraumes (18) angeordnet ist.

18. Vorrichtung nach einem der Ansprüche 1 bis 17, **dadurch gekennzeichnet, dass** die Sensorelemente (30, 33) analoge optische Lichttaster sind.

19. Verfahren zum Entleeren von mit stabförmigen Produkten gefüllten Schragen, insbesondere Schachtschragen (11), umfassend die Schritte:
- Öffnen des Schragens bzw. Schachtschragens (11),
- Leiten des Produktstroms durch einen Aufnahmeraum (18) des Entleermagazins (10) in den Bereich eines Förderelementes (22), wobei der Produktstrom durch Stromregulierungselemente (26) innerhalb des Aufnahmeraums (18) sowie im Bereich eines durch das Förderelement (22) gebildeten Kanals (23) reguliert wird, und
- Abtransport des Produktstroms entlang des Kanals (23), **dadurch gekennzeichnet, dass** die Füllstandshöhe innerhalb des Schragens bzw. Schachtschragens (11) ermittelt wird und die Stromregulierungselemente (26) entsprechend der Füllstandshöhe eingestellt werden.

20. Verfahren nach Anspruch 19, **dadurch gekennzeichnet, dass** die Füllstandshöhe innerhalb jedes Schachtes (17) eines Schachtschragens (11) ermittelt und über eine Steuerung ausgewertet wird, wobei die Ergebnisse der Auswertung die Grundlage für die Einstellung der Stromregulierungselemente (26) bilden.

21. Verfahren nach Anspruch 19 oder 20, **dadurch gekennzeichnet, dass** die Kontur der Stromregulierungselemente (26) automatisch verändert wird.

22. Verfahren nach einem der Ansprüche 19 bis 21, **dadurch gekennzeichnet, dass** der Querschnitt des Kanals (23) abschnittsweise verändert wird.

23. Verfahren nach einem der Ansprüche 19 bis 22, **dadurch gekennzeichnet, dass** durch die Stromregulierungselemente (26) und Seitenwände (20, 21) des Aufnahmeraums (18) gebildete Auslassschächte (27) in ihrem Querschnitt verändert werden.
